# EUROPÄISCHE PATENTSCHRIFT

(11) **EP 0 411 267 B1**
(45) Veröffentlichungstag und Bekanntmachung des Hinweises auf die Patenterteilung: **09.02.1994**
(21) Anmeldenummer: 90110195.6
(22) Anmeldetag: 29.05.1990
(51) Int. Cl.: F25D 17/00, F25D 11/02, A23L 3/3418

(54) **Kühlgerät insbesondere Kühlschrank oder dgl.**
Refrigeration apparatus, especially refrigerator or the like
Appareil frigorifique, notamment réfrigérateur ou analogues

(30) Priorität: 25.07.1989 DE 3924589
(43) Veröffentlichungstag der Anmeldung: 06.02.1991
(73) Patentinhaber: Bosch-Siemens Hausgeräte GmbH, 81669 München (DE)
(72) Erfinder: Herrmann, Franz, Dipl.-Ing. (FH), E-31620 Olaz/Navarra (ES); Wenning, Udo, Dr., D-7928 Giengen (DE); Haftlmeier, Theo, D-7928 Giengen (DE)

(56) Entgegenhaltungen:
- DE-A- 2 847 253
- DE-U- 7 145 035
- FR-A- 1 377 844
- FR-A- 1 394 681
- FR-A- 2 110 903

## Beschreibung

Die Erfindung betrifft ein Kühlgerät, insbesondere einen Kühlschrank oder dgl., dessen Nutzraum zumindest teilweise von einem oder mehreren, mit einer Ventileinrichtung versehenen, druckfest verschließbaren Behältnissen in Form von fest eingebauten Fächern und/oder herausnehmbaren Behältern, Gefäßen und dgl. zum Einlagern von Kühlgut eingenommen ist und welches eine Vorrichtung zum Absenken des in den Behältnissen herrschenden Druckes durch teilweises Absaugen des das Kühlgut umgebenden restlichen Luftvolumens aufweist.

Bei bekannten Kühlgeräten der genannten Art (siehe z.B. DE-U-7145035) wird das im geschlossenen Behältnis vom eingebrachten Kühlgut nicht verdrängte restliche Luftvolumen durch Absaugen mit einer - ggf. im Gerät fest eingebauten - Evakuiervorrichtung auf ein niedriges Druckniveau gebracht, wodurch die darin zur Verfügung stehende Sauerstoffmenge vermindert wird. Hierdurch werden bei oxidationsempfindlichem Kühlgut durch Oxidationsprozesse an dessen Oberfläche auftretende Farbänderungen und darauf zurückzuführendes Unansehnlichwerden des Kühlgutes weitgehend vermieden. Darüber hinaus läßt sich hiermit auch das unter Anwesenheit von Sauerstoff verstärkt auftretende Mikrobenwachstum vermindern, so daß der darauf zurückzuführende Zersetzungsprozeß verlangsamt und dadurch ausgelöste Qualitätsverminderung oder gar Verderb des Kühlgutes erheblich verzögert wird. Dieser günstige Effekt wird durch die Kühllagerung des Kühlgutes noch erheblich verstärkt.

Um den in den Behältnissen noch verbleibende Rest an Sauerstoff im Interesse einer langen Lagerfähigkeit des Kühlgutes möglichst gering zu halten ist man bestrebt, diese weitgehend zu evakuieren. Dies setzt jedoch die Verwendung von leistungsfähigen und daher teuren Evakuiervorrichtungen mit entsprechendem Raumbedarf und ebenso die Verwendung von stabilen Behältnissen voraus. Letztere sind aufgrund der hierzu erforderlichen großen Wandstärke schwer und unhandlich. Sie müssen darüber hinaus auch absolut dicht sein, um selbst bei langen Lagerzeiten die Aufrechterhaltung eines niedrigen Druckniveaus zu gewährleisten und das Eindringen von Luft aus der umgebenden Atmosphäre möglichst weitgehend auszuschließen. Wegen des während des Gebrauchs herrschenden starken Druckgefälles gegenüber der um gebenden Atmosphäre müssen die Behältnisse zudem auch aus diffussionsdichtem Werkstoff gefertigt sein und eine zusätzliche Vorrichtung besitzen, mit deren Hilfe es möglich ist, beim Öffnen der Behältnisse das darin herrschende Vakuum zu brechen.

Obwohl sich bei Kühlgeräten dieser besonderen Art für das Kühlgut große Vorteile bezüglich seiner erheblich längeren Lagerfähigkeit gegenüber derjenigen in den üblichen Kühlgeräten erzielen lassen, haben sie sich wegen des damit bis heute erforderlichen hohen Kostenaufwandes sowohl für die Evakuiervorrichtung als auch für die Behältnisse selbst nicht durchsetzen können.

Der Erfindung liegt nunmehr die Aufgabe zugrunde, Kühlgeräte der eingangs näher bezeichneten Art durch einfache Maßnahmen so zu verbessern, daß sich die bekannten Vorteile einer Kühl-Lagerung in druckverminderter Atmosphäre nutzen lassen, ohne daß dabei die vorstehend geschilderten Nachteile bekannter Kühlgeräte in Kauf genommen werden müssen.

Diese Aufgabe wird nach der vorliegenden Erfindung dadurch gelöst, daß das Kühlgerät mit einer Vorrichtung zum Befüllen der Behälter mit einer die Lagerfähigkeit des eingelagerten Kühlgutes erhöhenden Gasatmosphäre versehen ist.

Durch die erfindungsgemäße Maßnahme wird neben der bekannten Verminderung einer mikrobiologischen Gefährdung und damit einer Verlängerung der Haltbarkeit des eingelagerten Kühlgutes durch Anwendung einer seine Lagerfähigkeit erhöhenden Gasatmosphäre eine weitere Verbesserung dadurch erreicht, daß die Behältnisse wegen des nur kurzzeitig beim Evakuieren auftretenden Druckabfalls wesentlich leichter und damit besser handhabbar gestaltet werden können.

Nach einer besonders vorteilhaften Ausgestaltung des Gegenstandes der Erfindung ist vorgesehen, daß die Vorrichtung zum Befüllen der Behälter auswechselbar im Kühlgerät angeordnete Druckbehälter aufweist, welche mit leicht zugänglichen, an die Ventileinrichtungen der Behältnisse kuppelbaren Auslaßventilen ausgestattete sind.

Nach einer weiteren vorteilhaften Ausgestaltung des Gegenstandes der Erfindung ist vorgesehen, daß die Druckbehälter als Gasflaschen ausgebildet sind, die herausnehmbar in einem schubladenartig ausziehbaren Fach des Kühlgerätes angeordnet sind.

Hierdurch ist der Druckbehälter zum Befüllen der Behälter jederzeit leicht erreichbar und im Bedarfsfall - wenn sein Inhalt erschöpft ist - durch einen vollen Behälter ersetzbar.

Nach einer noch weitergehenden vorteilhaften Weiterbildung des Gegenstandes der Neuerung ist vorgesehen, daß das schubladenartige Fach außer dem Druckbehälter auch eine Evakuiervorrichtung für die zur Aufnahme von Kühlgut bestimmten Behältnisse enthält.

Hierdurch läßt sich die Wartung und Handhabung des Gerätes weitgehend vereinfachen.

Eine besondere Bedienungserleichterung ergibt sich, wenn entsprechend einer weiteren vorteilhaften Ausgestaltung des Gegenstandes der Erfindung vorgesehen ist, daß die Evakuiervorrichtung mit einer leicht zugänglichen, an die Ventileinrichtung der Behältnisse kuppelbaren Kupplungsvorrichtung ausgestattet ist.

Schließlich ist in einer zusätzlichen vorteilhaften Ausgestaltung des Gegenstandes der Erfindung vorgesehen, daß der Druckbehälter mit einer Vorrichtung versehen ist, mit deren Hilfe der darin herrschende Druck auf den Atmosphärendruck der Umgebungsluft absenkbar ist.

Hiermit ist es möglich, die Behältnisse ohne eine besondere Dosiervorrichtung nach dem Evakuieren entsprechend dem darin verbliebenen freien Raum mit einer Gasatmosphäre zu füllen, deren Druck dann nur leicht unter dem jeweils herrschenden Atmosphärendruck liegt. Hierdurch lassen sich die Behältnisse im Bedarfsfall leicht öffnen Durch den somit auch während der Kühlphase im Behältnis herrschenden geringen Druckunterschied gegenüber dem Atmosphärendruck werden auch Diffusionsvorgänge, welche die im Behältnis herrschende Gasatmosphäre negativ beeinflussen könnten, weitgehend ausgeschaltet.

Die Erfindung ist in der nachfolgenden Beschreibung anhand von zwei in der beigefügten Zeichnung vereinfacht dargestellen Ausführungsbeispielen von Kühlschränken mit einer Vorrichtung zum Evakuieren und anschließenden Befüllen von Behältnissen für Kühlgut, mit einer dessen Lagerfähigkeit erhöhenden Gasatmosphäre erläutert. Es zeigen:
- Fig. 1: in einem Ausschnitt den unteren Abschnitt eines in einen Möbelumbau eingesetzten Einbau-Kühlschrankes, bei dem die Tür weggelassen ist, um die in seinem Inneren angeordnete Vorrichtung sichtbar zu machen, welche zum Absenken des Luftdruckes in einem Behälter für Kühlgut dient, dessen Lagerfähigkeit durch anschließendes Befüllen mit Gasatmoshäre erhöht wird, in raumbildlicher Darstellung,
- Fig. 2: die in einem schubladenartigen Fach des Kühlschrankes nebeneinander angeordnete Vorrichtung zum Evakuieren und zum Befüllen der Behälter, in vergrößerte, raumbildlicher Darstellung,
- Fig. 3: einen mit einem Deckel versehenen Behälter zum Einlagern des Kühlgutes, welcher mit einer am Deckel vorgesehen Ventileinrichtung zum Evakuieren und Befüllen mit einer Gasatmosphäre ausgestattet ist, im Schnitt und
- Fig. 4: in einer der Fig. 1 entsprechenden Ansicht ein anderes Ausführungsbeispiel des Kühlgerätes, bei dem die Evakuier- und Befüllvorrichtung der Behälter in einem besonderen Fach am Boden des Kühlgerätes verdeckt untergebracht ist.

In einem Küchen-Hochschrank 10 mit einer Einbaunische 11 sitzt das Gehäuse eines Einbaukühlgerätes 12, in dessen mit einer nicht dargestellten Tür verschließbaren Nutzraum in der üblichen Weise übereinander mehrere, als Ablagen für Kühlgut dienende Traggitter 13 oberhalb einer unteren Tragplatte 14 angeordnet sind.

Unterhalb der Tragplatte 14 befinden sich nebeneinander angeordnet zwei Schübe 15 und 16, von denen der mit 15 bezeichnete als Gemüseschale ausgebildet ist, während der Schub 16 zur Aufnahme einer Evakuiervorrichtung 17 und eines Druckbehälters 18 in Form einer Gasflasche dient. Zu diesem Zweck befindet sich am Boden des Schubes eine Aufnahme 19, in welcher die Evakuierpumpe 17 und der Druckbehälter 18 nebeneinander liegend angeordnet sind. Diese sind in der Aufnahme 19 von einem federnden Bügel 20 gehalten, welcher im vorliegenden Falle mit einer Flügelschraube 21 befestigt ist, die ihrerseits in einer die Aufnahme 19 unterteilenden Rippe 22 verankert ist. Die Evakuierpumpe 17 ist an ihrem der Frontseite des Schubes 16 zugekehrten Ende mit einer Regeleinrichtung 23 versehen, mit deren Hilfe der Grad des zu erzielenden Vakuums einstellbar ist. Sie ist ferner mit einer Schnellkupplung 24 ausgestattet, deren Nippel durch einen in der Frontseite des Schubes 16 befindlichen Durchbruch hindurchragt. An ihrem entgegengesetzten Ende befindet sich ein Anschlußkabel 25, welches zu deren Entsorgung dient und nach hinten aus dem Schub 16 herausgeführt ist. Der Druckbehälter 18 ist dagegen in der üblichen Weise mit einem auf dessen Hals aufgesetzten, einstellbaren Reduzierventil 46 versehen, an dem sich eine Schnellkupplung 27 befindet. Diese ragt ebenfalls mit ihrem Nippel durch einen Durchbruch in der Frontseite des Schubes 16 nach außen.

Die beschriebene Anordnung dient zum Evakuieren und Begasen von in den Nutzraum des Kühlgerätes 12 einstellbaren Behältern 26, welche zur Aufbewahrung von kleineren Mengen von hochwertigem Kühlgut bestimmt sind. Diese sind, wie insbesondere aus der Fig. 3 erkennbar, im ganzen quaderförmig ausgebildeten und mit einem Deckel 28 verschließbar. Letzterer ist an seinem Rand in bekannter Weise mit einer eine Dichtung aufnehmenden Nut versehen, in welche der Rand des Behälters 26 beim Aufsetzen des Deckels 28 eingreift. Der Deckel 28 ist ferner an seiner Schmalseite mit einem Ventil 29 versehen, welches mit den Nippeln der Schnellkupplungen 24 und 27 sowohl der Evakuierpumpe 17 als auch dem Druckbehälter 18 kuppelbar ist.

Mit der beschriebene Anordnung läßt sich die Lagerfähigkeit des im Behälter 26 eingelegten Kühlgutes beträchtlich erhöhen. Hierzu wird nach dessen Einlagern das noch im Behälter 26 verbliebene restliche Luftvolumen durch teilweises Absaugen evakuiert, indem der Behälter 26 bei aufgesetztem Deckel 28 mit dessen Ventil 29 an den Nippel 24 der Evakuierpumpe 17 angesetzt wird. Beim Einschalten der Evakuierpumpe 17 - das automatisch durch das Andrücken des Ventils 29 an den Nippel 24 erfolgen kann - wird dabei im Behälter 26 ein Teilvakuum erzeugt.Hierbei wird der Deckel 28 durch den herrschenden atmosphärischen Luftdruck dicht gegen den Rand des Behälters 26 angepreßt. Nachdem der zuvor an der Einstellvorrichtung 23 eingestellte Grad des Vakuums erreicht ist, wird das Ventil 29 vom Nippel 24 abgezogen und anschließend auf den Nippel 27 am Reduzierventil 46 des Druckbehälters 18 aufgesetzt. Hierbei strömt aus dem Druckbehälter 18 eine die Lagerfähigkeit des eingelagerten Kühlgutes erhöhende Gasatmosphäre - beispielsweise aus CO₂, N₂ oder dgl., ggf. aber auch eine Mischung verschiedener Gase - und füllt das im Behälter 26 zwar verdünnte Luftvolumen wenigstens teilweise wieder auf. Hierbei wird die Druckdifferenz zur atmosphärischen Luft bis auf einen geringen Unterdruck im Behälter 26 nach Möglichkeit nur so weit abgebaut, daß der Deckel 28 unter leichtem Druck geschlossen bleibt.

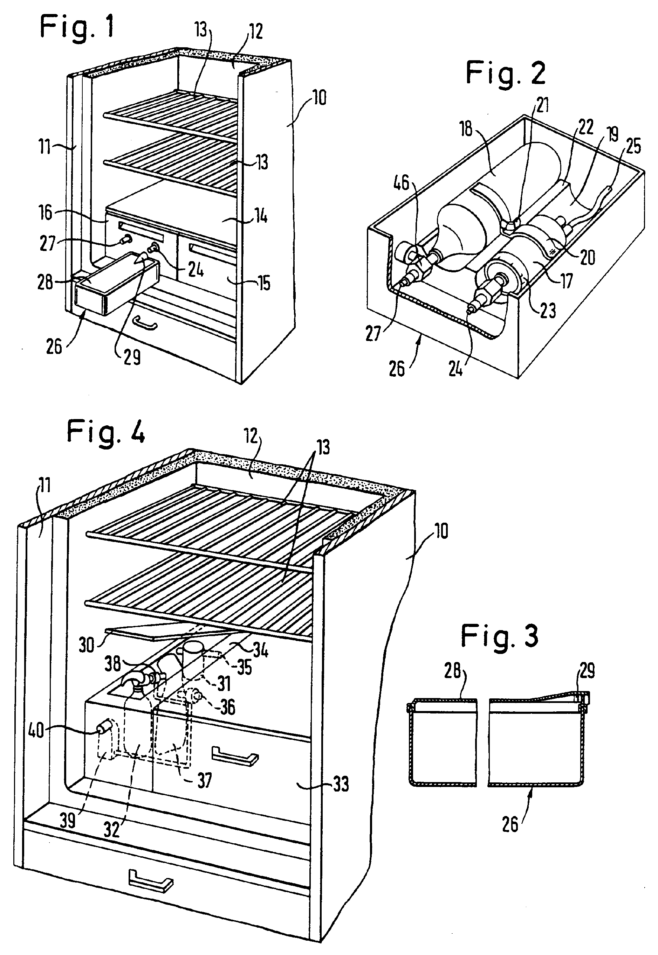

Bei dem in der Fig. 4 dargestellten zweiten Ausführungsbeispiel ist anstelle des Schubes 16 im unteren Bereich des Gehäuses ein mit einer Klappe 30 verschließbares Fach seitlich versetzt angeordnet, welches in diesem Falle die Evakuierpumpe 31 und den Druckbehälter 32 aufnimmt.

Anders als beim ersten Ausführungsbeispiel ist hierbei ein Behälter 33 zum Einlagern des Kühlgutes schubladenartig in das Gehäuse des Kühlgerätes 12 derart eingesetzt, daß er sich neben dem die Evakuierpumpe 31 und den Druckbehälter 32 aufnehmenden Fach befindet und von diesem durch eine Zwischenwand 34 getrennt ist. In diesem Falle ist der Saugstutzen 35 der Evakuierpumpe 31 durch die Zwischenwand 34 hindurchgeführt, so daß diese durch seine Seitenwand in den Behälter 33 einmünden. Weiterhin ist in der Zwischenwand 34 ein Magnetventil 36 angeordnet. Dieses verschließt den Ausgang eines als Zwischenbehälter für die Gasatmosphäre dienenden Foliensacks 37, der in dem die Evakuierpumpe 31 und den Druckbehälter 32 aufnehmenden Fach angeordnet ist und andererseits an ein Druckminderventil 38 angeschlossen ist, welches seinerseits am Ausgang des Druckbehälters 32 sitzt. Das Magnetventil 36 und das Druckminderventil 38 ist ebenso wie die Evakuierpumpe 31 über eine im einzelnen nicht näher dargestellte Steuervorrichtung 39 ansteuerbar, welche mit einem in der Frontseite des Faches sitzenden Betätigungsknopf 40 auslösbar ist.

Bei dem zuletzt beschriebenen Ausführungsbeispiel wird der Behälter 33 zum Einlegen des Kühlgutes unter einer ihn luftdicht verschließenden Abdeckplatte aus dem Gehäuse herausgezogen und anschließend in seine Ruhelage zurückgeführt. Darauf wird durch Betätigen des Knopfes 40 und der damit ausgelösten Steuervorrichtung 39 die Evakuierpumpe 31 in Betrieb gesetzt, so daß der Behälter 33 über den Saugstutzen 35 evakuiert wird. Nach dem Evakuieren wird dann, ebenfalls unter Einfluß der Steuervorrichtung 39, das Druckminderventil 38 kurzzeitig geöffnet, wodurch aus dem Druckbehälter 32 das die Lagerfähigkeit des eingelagerten Kühlgutes erhöhende Gas zunächst in den Foliensack 37 strömt und diesen nur soweit aufbläst, daß gegenüber dem Atmosphärendruck nur ein geringes Druckgefälle besteht. Beim anschließenden von der Steuervorrichtung 39 kontrollierten Öffnen des Magnetventils 36 wird das in dem Foliensack 37 gespeicherte, annähernd auf Atmosphärendruck entspannte Gas aufgrund des nun im Behälter 33 herrschenden Unterdrucks in dem Behälter 33 gesaugt. Dieser Vorgang wird ggf. solange wiederholt, bis sich in dem Behälter 33 annähernd ein Druckausgleich gegenüber dem Atmosphärendruck eingestellt hat. Abweichend von dem dargestellten und beschriebenen zweiten Ausführungsbeispiel kann auch vorgesehen sein, daß der Behälter 33 mit einem separaten Deckel ausgestattet ist. Bei der hier vorgesehenen Größe des Behälters 33 und dem dafür erforderlichen großflächigen Deckel ist es aus Stabilitätsgründen jedoch günstiger, den Behälter in ein geschlossenes Fach einzuschieben, das mit dem Einsetzen des Behälters an seiner Öffnung luftdicht verschließbar ist.

In beiden beschriebenen und dargestellten Fällen ist es besonders wichtig, daß nach dem Evakuieren in den Behältern 26 bzw. 33 ein Druckausgleich gegenüber dem Atmosphärendruck erfolgt, indem aus dem Druckbehälter 18 bzw. 32 das die Lagerfähigkeit des eingelagerten Kühlgutes erhöhende Gas angesaugt wird. Dadurch, daß das in dem Druckbehälter 18 bzw. 32 gespeicherte Gas zunächst wie vorgesehen auf Atmosphärendruck entspannt wird, wird in den zuvor evakuierten Behältern 26 bzw. 33 nur soviel Gas nachgesaugt, wie es dem in diesen Behältern neben den eingelagerten Kühlgut verbleibenden restlichen Luftvolumen entspricht. Eine kleine, hierbei noch bestehen bleibende Druckdifferenz sorgt dann dafür, daß die Behälter geschlossen bleiben und keine atmosphärische Luft mit entsprechendem Sauerstoffanteil eindringen lassen.

Abweichend von den dargestellten und beschriebenen Ausführungsbeispielen ist es auch möglich, einen oder mehrere Druckbehälter 18 und ggf. auch die Evakuierpumpe 17 in der Tür des Einbau-Kühlgerätes 12 anzuordnen, die dann in diesem Falle mit entsprechenden Aufnahmevorrichtungen ausgestattet ist.

## Patentansprüche

1. Kühlgerät, insbesondere Kühlschrank oder dgl., dessen Nutzraum zumindest teilweise von einem oder mehreren, mit einer Ventileinrichtung versehenen; druckfest verschließbaren Behältern (26; 33) in Form von fest eingebauten Fächern und/oder herausnehmbaren Behältern, Gefäßen und dgl. zum Einlagern von Kühlgut eingenommen ist und welches eine Vorrichtung (17; 31) zum Absenken des in den Behältern (26; 33) herrschenden Druckes durch teilweises Absaugen des das Kühlgut umgebenden restlichen Luftvolumens aufweist, **dadurch gekennzeichnet,** daß das Kühlgerät (12) mit einer Vorrichtung (18,27,46; 32,37,38) zum Befüllen der Behälter (26; 33) mit einer die Lagerfähigkeit des eingelagerten Kühlgutes erhöhenden Gasatmosphäre versehen ist.

2. Kühlgerät nach Anspruch 1, dadurch gekennzeichnet, daß die Vorrichtung zum Befüllen der Behälter (26, 33) auswechselbar im Kühlgerät (12) angeordnete Druckbehälter (18, 32) aufweist, welche mit leicht zugänglichen, an die Ventileinrichtungen (24, 35 und 36) kuppelbaren Auslaßventilen (24, 27) ausgestattet sind.

3. Kühlgerät nach Anspruch 1 oder 2, dadurch gekennzeichnet, daß die Druckbehälter (18, 32) als Gasflaschen ausgebildet sind, die herausnehmbar in einem Schubfach (16) des Kühlgeräts (12) angeordnet sind.

4. Kühlgerät nach Anspruch 3, dadurch gekennzeichnet, daß das Fach (16) außer dem Druckbehälter (18) auch eine Evakuiervorrichtung (17) für die zur Aufnahme von Kühlgut bestimmten Behältnisse (26, 33) enthält.

5. Kühlgerät nach Anspruch 4, dadurch gekennzeichnet, daß die Evakuiervorrichtung (17, 31) mit einer leicht zugänglichen, an die Ventileinrichtung (29) des Behälters (26) kuppelbaren Kupplungsvorrichtung (24, 27) ausgestattet ist.

6. Kühlgerät nach einem der Ansprüche 2-5, dadurch gekennzeichnet, daß der Druckbehälter (32) mit einer Vorrichtung (37, 38) versehen ist, mit deren Hilfe der Druck auf den Atmosphärendruck der Umgebungsluft absenkbar ist.

## Claims

1. Cooling apparatus, particularly refrigerator or the like, the work space of which is occupied at least partly by one or several pressure-resistant, closable containers (26; 33), which are provided with a valve device, in the form of fixedly installed compartments and/or removable containers, vessels and the like for the storage of stock to be cooled and which comprises a device (17; 31) for the lowering of the temperature prevailing in the containers (26; 33) through partial extraction of the residual air volume surrounding the stock to be cooled, characterised thereby that the cooling apparatus (12) is provided with a device (18, 27, 46; 32, 37, 38) for the filling of the containers (26; 33) with a gas atmosphere increasing the storage stability of the stored stock to be cooled.

2. Cooling apparatus according to claim 1, characterised thereby that the device for the filling of the containers (26, 33) comprises pressure containers (18, 32) which are exchangeably arranged in the cooling apparatus (12) and which are equipped with readily accessible outlet valves (24, 27) couplable to the valve devices (24, 35 and 36).

3. Cooling apparatus according to claim 1 or 2, characterised thereby that the pressure containers (18, 32) are constructed as gas bottles, which are removably arranged in a drawer (16) of the cooling apparatus (12).

4. Cooling apparatus according to claim 3, characterised thereby that the drawer (16) also contains, apart from the pressure container (18), an evacuating device (17) for the containers (26, 33) intended for the reception of stock to be cooled.

5. Cooling apparatus according to claim 4, characterised thereby that the evacuating device (17, 31) is equipped with a readily accessible coupling device (24, 27) couplable to the valve device (29) of the container (26).

6. Cooling apparatus according to one of claims 2 to 5, characterised thereby that the pressure container (32) is provided with a device (37, 38) with the aid of which the pressure is lowerable to the atmospheric pressure of the ambient air.

## Revendications

1. Appareil réfrigérant, notamment réfrigérateur ou analogue, dont l'espace utile est occupé au moins partiellement par un ou plusieurs récipient(s) (26; 53) en forme de compartiments fixes et/ou de récipients et analogues amovibles pour le stockage du produit à réfrigérer qui sont fermés de manière étanche à la pression et sont pourvus d'un système de valves, lequel appareil présente un dispositif (17; 31) pour abaisser la pression régnant à l'intérieur des récipients (26; 33) par aspiration partielle du volume d'air résiduel entourant le produit à réfrigérer, caractérisé par le fait que l'appareil réfrigérant (12) est pourvu d'un dispositif (18, 27, 46; 32, 37 38) pour le remplissage des récipients (26; 33) avec une atmosphère de gaz qui augmente la conservation du produit stocké.

2. Appareil réfrigérant selon la revendication 1, caractérisé par le fait que le dispositif pour le remplissage des récipients (26, 33) présente des récipients à pression (18, 32) qui sont disposés avec possibilité de remplacement dans l'appareil réfrigérant (12) et sont pourvus de valves de sortie (24, 27) aisément accessibles qui peuvent être connectées au système de valves (24, 35 et 36).

3. Appareil réfrigérant selon la revendication 1 ou 2, caractérisé par le fait que les récipients à pression (18, 32) sont agencés sous forme de bouteilles de gaz qui sont disposées de manière amovible dans un compartiment tiroir (16) de l'appareil réfrigérant (12).

4. Appareil réfrigérant selon la revendication 3, caractérisé par le fait que le compartiment (16) contient, outre le récipient à pression (18), un dispositif (17) pour réaliser le vide dans les récipients (26, 33) destinés à recevoir des produits à réfrigérer.

5. Appareil réfrigérant selon la revendication 4, caractérisé par le fait que le dispositif à faire le vide (17, 31) est pourvu d'un dispositif de connexion (24, 27) aisément accessible qui peut être connecté au système de valve (29) du récipient (26).

6. Appareil réfrigérant selon l'une des revendications 2 à 5, caractérisé par le fait que le récipient à pression (32) est pourvu d'un dispositif (37, 38) au moyen duquel on peut ramener la pression à la pression atmosphérique de l'air ambiant.
